# EUROPÄISCHE PATENTSCHRIFT

(11) **EP 3 684 846 B1**
(45) Veröffentlichungstag und Bekanntmachung des Hinweises auf die Patenterteilung: **14.01.2026**
(21) Anmeldenummer: 18773350.6
(22) Anmeldetag: 05.09.2018
(51) Int. Cl.: C08G 73/18

(54) **VERFAHREN ZUR HERSTELLUNG VON POLYBENZIMIDAZOLEN**
PROCESS FOR PREPARING POLYBENZIMIDAZOLES
PROCÉDÉ DE PRÉPARATION DE POLYBENZIMIDAZOLES

(30) Priorität: 20.09.2017 AT 3742017
(43) Veröffentlichungstag der Anmeldung: 29.07.2020
(73) Patentinhaber: Technische Universität Wien, 1040 Wien (AT)
(72) Erfinder: UNTERLASS, Miriam Margarethe, 1070 Wien (AT); TAUBLAENDER, Michael J., 7203 Wiesen (AT); THIELE, Sophia, 1050 Wien (AT)
(74) Vertreter: Ellmeyer, Wolfgang
(86) Internationale Anmeldenummer: PCT/EP2018/073901
(87) Internationale Veröffentlichungsnummer: WO 2019/057498

(56) Entgegenhaltungen:
- EP-A1- 1 441 015
- EP-A2- 0 095 348
- WO-A1-2016/179625
- DE-A1- 1 943 499
- US-B2- 9 200 118
- I. NAGAO ET AL: "Rapid production of benzazole derivatives by a high-pressure and high-temperature water microflow chemical process", GREEN CHEMISTRY, vol. 18, no. 12, 25 May 2016 (2016-05-25), GB, pages 3494 - 3498, XP055536031, ISSN: 1463-9262, DOI: 10.1039/C6GC01195K
- LUCINDA M. DUDD ET AL: "Synthesis of benzimidazoles in high-temperature waterThis work was presented at the Green Solvents for Catalysis Meeting held in Bruchsal, Germany, 13-16th October 2002.Electronic supplementary information (ESI) available: analytical data for compounds 3a-f and 5g-j. See http://www.rsc.org/suppdata/", GREEN CHEMISTRY, vol. 5, no. 2, 12 March 2003 (2003-03-12), GB, pages 187 - 192, XP055536025, ISSN: 1463-9262, DOI: 10.1039/b212394k

## Beschreibung

Die vorliegende Erfindung betrifft ein neues Verfahren zur Herstellung von Polybenzimidazolen.

### STAND DER TECHNIK

Aromatische Polybenzimidazole, d.h. Polymere, in denen zwei Benzimidazol-Einheiten über einen aromatischen Linker verbunden sind und so ein durchkonjugiertes System bilden, stellen aufgrund ihrer besonderen Eigenschaften (hoher Schmelzpunkt, Härte, Druckbeständigkeit. Lichtabsorptionsvermögen) wertvolle Hochleistungspolymere, beispielsweise zur Verwendung auf dem Brandschutzsektor, für Hochtemperaturmembranen in Polymerelektrolytbrennstoffzellen oder in der Photovoltaik dar. Ihre Synthese erfolgt in der Regel durch Polykondensation von aromatischen Tetraaminen, genauer gesagt Bis(o-diaminen), mit aromatischen Di- oder höherwertigen Carbonsäuren - oder deren Estern, Anhydriden oder Aldehyden - unter Erhitzen der Reaktanten auf Temperaturen von weit über hundert Grad (bei Verwendung hochsiedender Lösungsmittel) bis hin zu mehreren hundert Grad Celsius (im festen Zustand). Dabei werden - bei Verwendung zweiwertiger Carbonsäuren oder Aldehyde Polymere erhalten, in denen der Rest X des jeweiligen Carbonsäure- oder Aldehyd-Moleküls eine Verbindung zwischen je zwei Imidazol-Ringen der Polybenzimidazole bildet, wie nachstehend dargestellt.

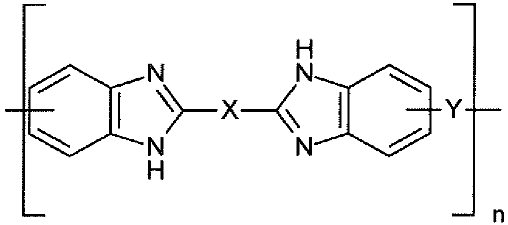

Die Benzolringe der Polybenzimidazole sind dabei - je nach Wahl des Tetraamins - über einen (vorzugsweise aromatischen) Linker Y verbunden, der jedoch auch eine direkte chemische Bindung sein kann, wie sie z.B. bei Verwendung von Tetraaminobiphenyl (Diaminobenzidin, DAB) als Tetraamin entsteht. Ein Spezialfall ist bei Verwendung von Tetraaminobenzol gegeben, da hier die beiden Imidazolringe an denselben Benzolring gebunden sind, wie dies nachstehend gezeigt wird.

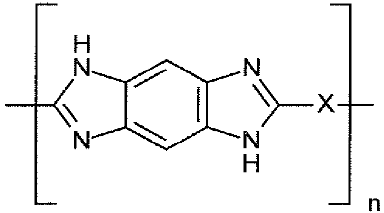

Die Synthese solcher Polymere unter Verwendung aromatischer Dialdehyde wird vor allem in einem umfassenden Review von Eberhard Neuse (Adv. Polym. Sci. 47, 1-42 (1982) sowie speziell für Diaminobenzidin als Tetraamin einem weiteren Artikel dieses Autors (Neuse und Loonat, Macromolecules 16(1), 128-136 (1983)) ausführlich beschrieben. Demzufolge kommt es bereits beim Vermischen von Tetraamin und Dialdehyd zur Bildung eines Polymers, das als Schiffsche Base beschrieben wird, wie sie nachstehend für den Fall der Reaktion von Terephthalsäuredialdyhyd und Diaminobenzidin dargestellt ist: 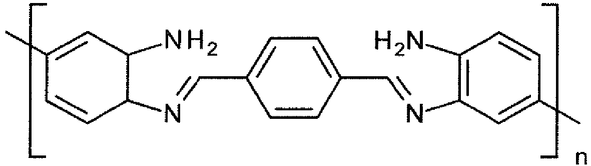 die in der Folge zum Polybenzimidazol zyklisiert wird. In beiden Artikeln wird ausdrücklich auf die Notwendigkeit des Ausschlusses von Sauerstoff beim Vermischen der Reaktanten sowie der Gegenwart desselben im nachfolgenden Zyklisierungsschritt hingewiesen. Im ersten Polykondensationsschritt soll es ansonsten, d.h. in Gegenwart von O₂, zu unerwünschten Oxidationsreaktionen kommen, während die Zyklisierung in Abwesenheit von O₂ als "höchst ineffizient", weil nur sehr langsam vonstatten gehend, offenbart wird.

Wie dem Review von Neuse, aber auch darin zitierter Literatur wie Vogel und Marvel, J. Polym. Sci. Pol. Chem. 50, 511 (1961), oder Iwakura et al., J. Polym. Sci. A 2, 2605 (1964), zu entnehmen, ist eine Vielzahl an klassischen Synthesemethoden für Polybenzimidazole bekannt. Die zwei wohl am gebräuchlichsten Strategien sind: (i) die "Marvel-Methode", d.h. lösungsmittelfreie Schmelzpolykondensation eines aromatischen Tetraamins mit einem Diphenylester einer aromatischen Dicarbonsäure bei Temperaturen bis zu 400 °C; und (ii) die "Iwakura-Methode": Lösungspolykondensation des Hydrochlorids eines aromatischen Tetraamins mit einer freien aromatischen Dicarbonsäure in Polyphosphorsäure bei Temperaturen von etwa 200 °C. Beide Techniken sind apparativ anspruchsvoll, aufwändig, nicht energieeffizient und erfordern ein sorgfältig ausgewähltes Heizprotokoll sowie die Kontrolle des Drucks bzw. die Abwesenheit von Luft.

Literatur zur Synthese monomerer Benzimidazole findet sich natürlich weitaus häufiger, darunter auch in den letzten Jahren immer beliebter werdende Hydrothermalsynthesen, d.h. Reaktionen in Wasser als einzigem oder zumindest Hauptlösungsmittel bei Temperaturen über 100 °C, da hierbei keine mitunter stark toxischen Lösungsmittel zu entsorgen sind. Siehe beispielsweise Dudd et al., Green Chem. 5, 187-192 (2003), für die Synthese von 2-Phenylbenzimidazol aus Diaminobenzol und Benzoesäure in Wasser mit Temperaturen bis zu 400 °C, wobei allerdings unter 350 °C keine Ausbeuten über 50 % erzielbar waren und erst nach 14 Stunden eine Ausbeute über 90 % festgestellt werden konnte, sowie Nagao et al., Green Chem. 18, 3494-3498 (2016), für die Synthese von 1,2-Diphenylbenzimidazol aus 2-Aminodiphenylamin und Benzoesäureanhydrid bei Temperaturen zwischen 400 und 445 °C.

Bei Verwendung vierwertiger Carboxyl- oder Carbonylverbindungen, z.B. von Tetracarbonsäuren oder deren Anhydriden, kommt es allerdings neben dem Ringschluss des Imidazolrings zu einem weiteren Zyklisierungsschritt. Bei Verwendung von Benzoltetracarbonsäure mit Tetraaminodiphenylether, wie dies von von Bell und Pezdirtz, J. Polym. Sci. Pol. Lett. 3(12), 977-984 (1965), offenbart wird, erfolgt beispielsweise zunächst als erste Polykondensation eine Amidierung unter Reaktion jeweils einer Amino- mit einer Carbonsäure-Funktionalität, wobei ein so genanntes Poly(aminosäure-amid), im Englischen "poly(amino-acid-amide)" oder "Poly(A-A-A)" gennant, entsteht. Danach sollen im zweiten Kondensationsschritt die ersten Ringschlüsse folgen: sei es durch Angriff der freien Amino-Funktionalitäten an den zuvor amidierten Carboxyl-Kohlenstoffen unter gleichzeitiger Wasserabspaltung zur Ausbildung von an die Benzolringe des Tetraamins anellierten Imidazolen unter Beibehaltung der freien Carboxylgruppen, oder aber durch Angriff der Amid-Stickstoffe an den freien Carboxyl-Kohlenstoffen unter Wasserabspaltung zur Ausbildung zweier Imid-Gruppierungen am Aromaten der Tetracarbonsäure unter Beibehaltung der freien Aminogruppen. Als dritter und letzter Kondensationsschritt erfolgen nun die Ringschlüsse unter Ausbildung der zweiten 5-gliedrigen Ringe, wie dies nachstehend dargestellt ist. Streng genommen entsteht freilich aus dem rechts dargestellten Zwischenprodukt mit freien Aminogruppen ein anderes, nämlich das um eine horizontale Achse gespiegelte Kondensationsprodukt, da im Polymer keine freie Drehbarkeit der Einheiten gegeben ist. Dies wird auch von Bell und Pezdirtz angemerkt ("designation of the positions is arbitrary").

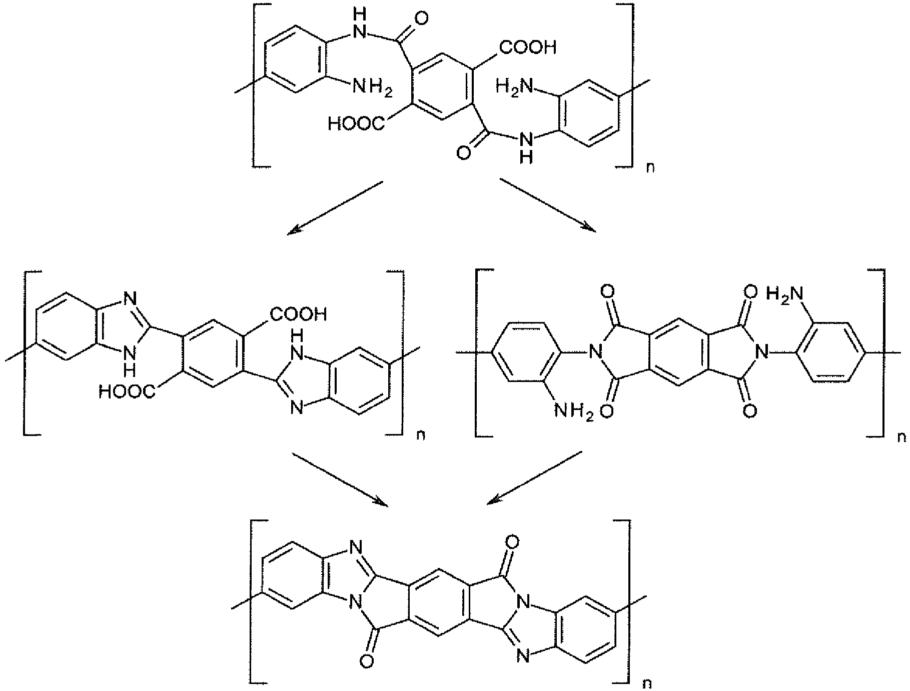

Gemäß Bell und Pezdirtz werden die polymeren A-A-A-Zwischenprodukte isoliert und als Lösung zur Beschichtung von Oberflächen eingesetzt, wonach erst durch Erhitzen auf 325 °C die vollständig kondensierten Polybenzimidazole entstehen.

Diese Polybenzimidazole werden in der Literatur unter anderem auch als Polyimidazopyrrolone oder kurz Polypyrrone bezeichnet. Siehe beispielsweise Dawans und Marvel, J. Polym. Sci., Part A: Polym. Chem. 3, 3549-3571 (1065), Bell und Jewell, J. Polym. Sci., Part A: Polym. Chem. 5, 3043-3060 (1967), und Johnston und Epps, J. Polym. Sci., Part A: Polym. Chem. 10, 2751-2765 (1972), wo durchwegs Synthesen ausgehend von Pyromellitsäuredianhydrid, entweder in fester Form bei Temperaturen zwischen 200 und 300 °C oder als Lösung in aprotischen, hoch siedenden Lösungsmitteln (z.B. Dimethylacetamid, DMAc), offenbart werden.

Interessanterweise offenbarte V. L. Bell, der 1965 zusammen mit G. F. Pezdirtz noch beide oben dargestellten Varianten für die Bildung von Zwischenprodukten aus dem anfänglichen Polykondensat "Poly(A-A-A)" für möglich erachtet hatte, zwei jahre später in Bell und Jewell (1967, s.o.) nur noch das rechte, freie Aminogruppen und zyklische Imide, aber keine freien Carbonsäuregruppen umfassende Zwischenprodukt.

Bei Verwendung von Naphthalintetracarbonsäure anstelle von Pyromellitsäure werden entsprechende Polybenzimidazole mit einem gesättigten 6-gliedrigen Ring erhalten. Aufgrund der Strukturidentität mit dem organischen Pigment und Halbleiter Perinon wurden diese in der jüngeren Vergangenheit auch als "Polyperinone" bezeichnet. Bezüglich der Synthese siehe beispielsweise Van Deusen, J. Polym. Sci. Pol. Lett. 4, 211-214 (1966), und Zhou und Lu, J. Appl. Polym. Sci. 58, 1561-1565 (1995). Letztere Literatur offenbart ebenfalls eine Reaktionsführung in Lösung in DMAc, wobei allerdings zunächst nur das nicht ringgeschlossene Zwischenprodukt hergestellt und isoliert wurde und nach anschließendem Folienziehen einer DMAc-Lösung davon durch Erhitzen auf 300 °C ringgeschlossen wurde. Auch andere Autoren beschreiben die Ausfällung und Isolierung des Zwischenprodukts, oder aber die Filtration oder Zentrifugation der Lösung desselben vor dem späteren Ringschluss. Van Deusen (s.o.) offenbart hingegen die direkte Polykondensation zum vollständig ringgeschlossenen Polyperinon in Polyphosphorsäure bei Temperaturen von bis zu 220 °C, worauf eine mitunter aufwändige Reinigung der Polymere erfolgen muss.

Morgan und Scott, J. Appl. Polym. Sci. 16, 2029-2050 (1972), offenbaren die Herstellung von stöchiometrischen Gemischen sowie Salzen aus der Tetracarbonsäure und dem Tetraamin unter Verwendung von N₂ als Schutzgas gegen Sauerstoffzutritt und die anschließende Polykondensation der Gemische bzw. Salze unter gleichzeitigem Formen des dabei erhaltenen Polymers durch Heißpressen unter Erhitzen auf Temperaturen von 450 °C. Dabei werden allerdings Produkte mit stark schwankender Qualität und Stabilität erhalten, wobei unter Stickstoff durchwegs einer höhere Stabilität als in Luft festgestellt wurde.

Allen diesen Polybenzimidazolen mit anelliertem 5- oder 6-gliedrigem Ring ist gemein, dass bezüglich der freien Carboxyl- bzw. Aminogruppen der Zwischenprodukte und somit auch der Carbonylgruppen der vollständig kondensierten Polymere cis- und trans-Isomerien vorliegen, wie dies Beil und Pezdirtz (s.o.) sowie Van Deusen (s.o.) andeuten und die Erfinder des vorliegenden Anmeldungsgegenstandes bestätigt haben, worauf später noch näher eingegangen wird.

Die Arbeitsgruppe der Erfinder hat bereits in der Vergangenheit umfangreiche Forschungen bezüglich Hydrothermalsynthesen zur Herstellung von Polyimiden angestellt; siehe z.B. PCT/AT2016/050140 sowie PCT/AT2017/000058. Konkret in Bezug auf die oben erwähnten Polybenzimidazole mit anelliertem 6-gliedrigen Ring ("Polyperinone") wurden ebenfalls bereits Forschungen angestellt; siehe z.B. Michael Taubländer, "Development of Novel Synthetic Routes Towards Polyimides and Poly(perinone)s", Diplomarbeit, Technische Universität Wien, 2017. Im Zuge dessen wurde herausgefunden, dass mittels Hydrothermalsynthese ausgehend von Naphthalintetracarbonsäuredianhydrid (NTCADA) und Diaminobenzidin (DAB) zwar prinzipiell auch die obigen 6-gliedrigen Polyperinone herstellbar sind. Allerdings wiesen die Produkte sehr niedrige Molekulargewichte auf (was mittels IR-Analyse ermittelt wurde), und die wässrigen Phasen waren stark verunreinigt und dunkelviolett gefärbt. Dies wurde auf einen erheblichen Anteil an oxidativer Polymerisation unter Bildung verschiedenster Nebenprodukte zurückgeführt, aufgrund derer die Stöchiometrie gestört wurde, weswegen kein hohes Molekulargewicht des gewünschten Polyperinons erzielbar war. Diese Nebenprodukte waren darüber hinaus kaum vom Zielpolymer zu trennen, da bei der Extraktion sowohl wässrige als auch ethanolische Waschlösungen selbst nach sehr vielen Durchgängen auch weiterhin stark gefärbt waren. EP 1 441 015 A1 beschreibt ein Syntheseverfahren von Polybenzimidazolen. Ein Polyimin-Zwischenprodukt aus Terephthaldehyd und Tetraaminobiphenyl (Diaminobenzidin, DAB), in Dimethylacetamid (DMAc) wird hergestellt, welches anschließend durch Erhitzen zum Polybenzimidazol zyklisiert wird. Ziel der vorliegenden Erfindung war vor diesem Hintergrund, ein verbessertes Verfahren zur Herstellung von Polybenzimidazolen, insbesondere der obigen Polybenzimidazole ohne anellierte 5- oder 6-gliedrige Ringe aus zweiwertigen Carboxyl- oder Carbonylverbindungen und Tetraaminen, zu entwickeln, durch das hochmolekulare Polymere auf relativ einfache Weise und ohne die Bildung großer Mengen an schwer abtrennbaren Nebenprodukten erhältlich sind.

### OFFENBARUNG DER ERFINDUNG

Dieses Ziel erreicht die vorliegende Erfindung durch Bereitstellung eines Verfahrens zur Herstellung von Polybenzimidazolen der nachstehenden Formel (1) oder (2), worin n ≥ 2 ist: 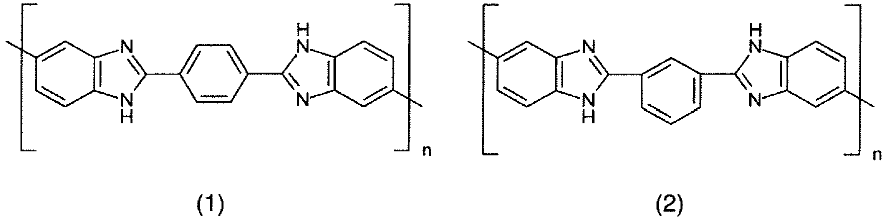 mittels Polykondensation entsprechender Dialdehyde und Tetraamine durch gemeinsames Erhitzen der Reaktanten, mit dem Kennzeichen, dass:
die Herstellung der Polybenzimidazole der Formel (1) oder (2) ausgehend von den Dialdehyden und im Wesentlichen ohne jegliche Bildung von Nebenprodukte erfolgt, indem
a) zunächst das Dialdehyd und das Tetraamin in Wasser bei Raumtemperatur miteinander vermischt werden, wobei ein Polyimin-Zwischenprodukt der Formel (3) oder (4) gebildet wird, worin n und m jeweils ≥ 1 sind: 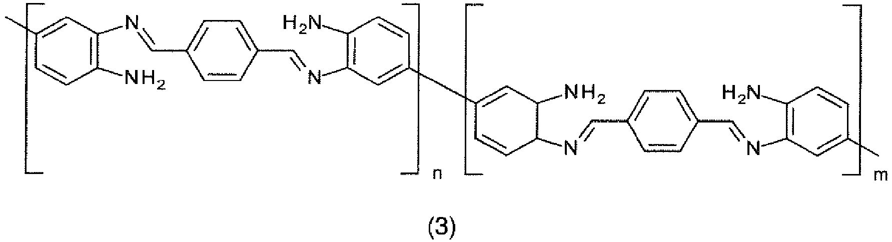 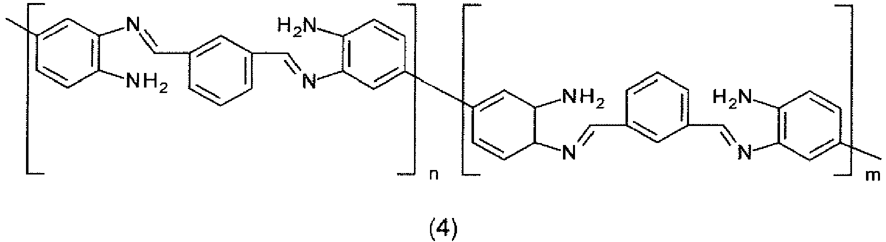 wonach
b) die Polykondensation unter hydrothermalen Bedingungen durch Erhitzen in Wasser als Lösungsmittel unter Druck auf Temperaturen über 100 °C durchgeführt wird.

Die Erfinder haben nämlich überraschenderweise festgestellt, dass eine Synthese von Polybenzimidazolen der Formeln (1) und (2) aus den entsprechenden Dialdehyden und Tetraaminen unter Hydrothermalbedingungen:
- während des Vermischens der Reaktanten keine Kühlung und nicht den Ausschluss von Sauerstoff erfordert;
- nach kurzer Reaktionszeit bei relativ niedrigen Temperaturen vollständig durchführbar ist;
- dabei keinerlei Nebenprodukte generiert; und
- nicht die Gegenwart von Sauerstoff erfordert;
wobei der letztere Umstand angesichts der Offenbarungen von Neuse (s.o.) besonders überraschend war.

In bevorzugten Ausführungsformen der Erfindung wird ein Polybenzimidazol der Formel (1) gemäß nachstehendem Reaktionsschema hergestellt, indem in Schritt a) Terephthalsäuredialdehyd, TDA, und Diaminobenzidin, DAB, in Wasser vermischt und in Schritt b) unter hydrothermalen Bedingungen zum Polybenzimidazol der Formel (1) polykondensiert werden:

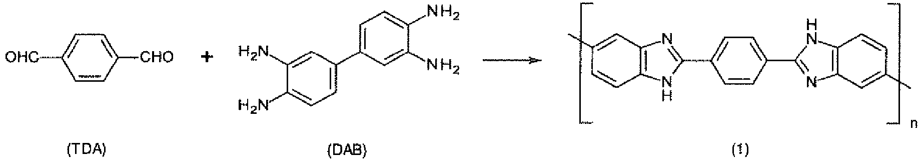

In alternativen bevorzugten Ausführungsformen wird ein Polybenzimidazol der Formel (2) gemäß nachstehendem Reaktionsschema hergestellt, indem in Schritt a) Isophthalsäuredialdehyd, IDA, und Diaminobenzidin, DAB, in Wasser vermischt und in Schritt b) unter hydrothermalen Bedingungen zum Polybenzimidazol der Formel (2) polykondensiert werden:

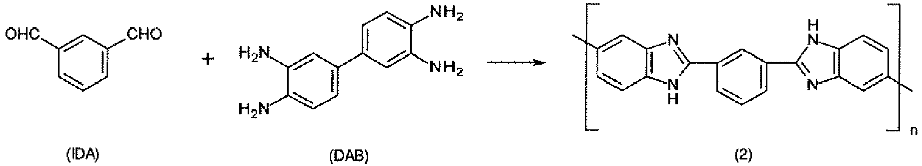

In beiden Fällen kann das Vermischen der Reaktanten bei Raumtemperatur ohne Inertgaseinsatz erfolgen, was eine erhebliche Erleichterung der Reaktionsführung gegenüber den von Neuse (s.o.) beschriebenen Vorgangsweise bedeutet. Darüber hinaus erfordert der Polykondensationsschritt keinesweg die Gegenwart von Sauerstoff, was anhand von Beispiel 5, bei dem das Reaktionsgemisch vor dem Aufheizen auf hydrothermale Bedingungen mit Argon entgast wurde, aber dennoch in relativ kurzer Zeit in identischer Weise zum gewünschten Polybenzimidazol reagierte, klar belegt wird.

Die Polykondensation in Schritt b) wird dabei vorzugsweise bei einer Temperatur von zumindest 180 °C für eine Dauer von zumindest 30 min, noch bevorzugter von zumindest 2 h, oder, was gemäß vorliegender Erfindung besonders bevorzugt wird, bei einer Temperatur von zumindest 250 °C für eine Dauer von zumindest 30 min durchgeführt., um die Reaktionszeit zu verkürzen.

### KURZBESCHREIBUNG DER ZEICHNUNGEN

In der Folge wird die vorliegende Erfindung anhand von nichteinschränkenden Beispielen unter unter Bezugnahme auf die beiliegenden Zeichungen näher beschrieben, von denen:
Fig. 1 das FTIR-ATR-Spektrum des in Beispiel 1 erhaltenen Polyimin-Zwischenprodukts zeigt;
Fig. 2 das FTIR-ATR-Spektrum des in Beispiel 1 erhaltenen Polybenzimidazols zeigt; und
Fig. 3 das FTIR-ATR-Spektrum des in Beispiel 5 erhaltenen Polybenzimidazols zeigt.

### BEISPIELE

### Beispiel 1

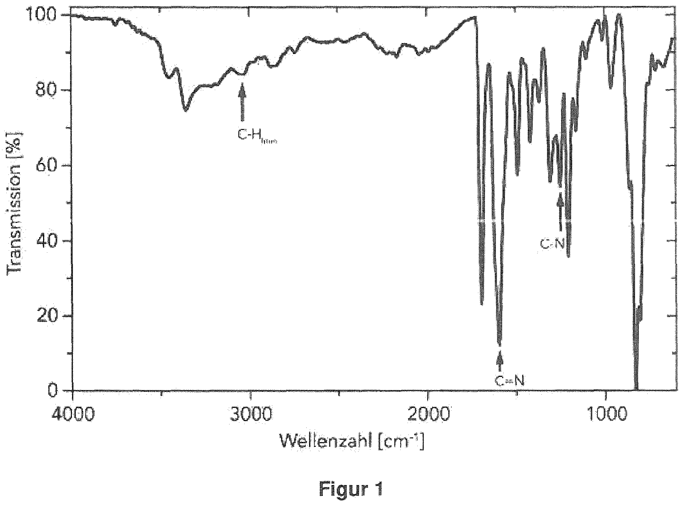

Herstellung eines Polybenzimidazols der Formel (1) bei 250 °C 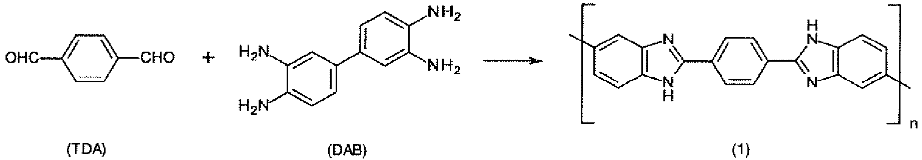 64 mg Terephtaldialdehyd (TDA) (0,48 mmol, 1 Äqu.) wurden in einem Glasliner in 40 ml dest. H₂O unter Rühren bei Raumtemperatur suspendiert. 103 mg 3,3'-Diaminobenzidin DAB (0,48 mmol, 1 Äqu.) wurden zugegeben und weitere 10 min lang bei Raumtemperatur gerührt, wobei ein roter Feststoff gebildet wurde. Die erhaltene rote Suspension wurde direkt für die Hydrothermalsynthese eingesetzt, ohne den Feststoff zu isolieren. Zur Charakterisierung dieses Zwischenprodukts wurde der Feststoff in einem separaten Ansatz abfiltriert, gewaschen, getrocknet und mittels IR-Spektroskopie analysiert. Das FTIR-ATR-Spektrum ist in Fig. 1 dargestellt und führte zur Identifizierung des roten Feststoffs als Polyimin-Intermediat, ähnlich wie einleitend beschrieben. Tatsächlich entspricht es freilich der nachstehenden Formel (3):

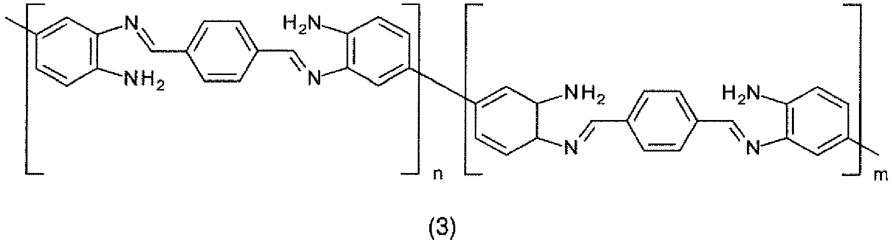

Ähnlich wie in den eingangs erwähnten Polybenzimidazolen mit anelliertem 5- oder 6-gliedrigem Ring liegen auch in den Polyimin-Zwischenprodukten der Formel (3) - wie auch in jenen der Formel (4) - aufgrund der eingeschränkten Drehbarkeit der konjugierten und daher planaren Moleküle cis- und trans-Isomerien bezüglich der freien Aminogruppen vor. Letztere können folglich in entgegengesetzte Richtungen oder in die gleiche Richtung weisen, wie dies hierin in den Formeln (3) und (4) anhand der unterschiedlichen, n-mal bzw. m-mal vorhandenen Einheiten dargestellt ist. Genau genommen existiert auch noch eine dritte Variante der Einheiten, nämlich jene, in der beide Aminogruppen nicht nach oben, sondern nach unten weisen. Aus Gründen der Übersichtlichkeit wird hierin auf die explizite Darstellung dieser Variante verzichtet. Das Verhältnis zwischen diesen Einheiten ist nicht eindeutig feststellbar und aufgrund ihrer identischen chemischen Eigenschaften auch nicht wesentlich für den weiteren Verlauf der hydrothermalen Kondensation, in dem die Isomerie zudem aufgehoben wird. Diese hat daher keinerlei Einfluss auf die Eigenschaften der erhaltenen Polybenzimidazole, weswegen hierin nicht näher darauf eingegangen wird.

Die charakteristischen Banden dieses Polyimins sind: v(C-Hₗₘᵢₙ) = 2875 cm⁻¹, v(C=N) =1595 cm⁻¹ und v(C-N) = 1205 cm⁻¹.

Für die Hydrothermalpolymerisation zum gewünschten Polybenzimidazol wurde die zuvor erhaltene rote Suspension in einen Mikrowellenautoklav (120 ml) übergeführt.

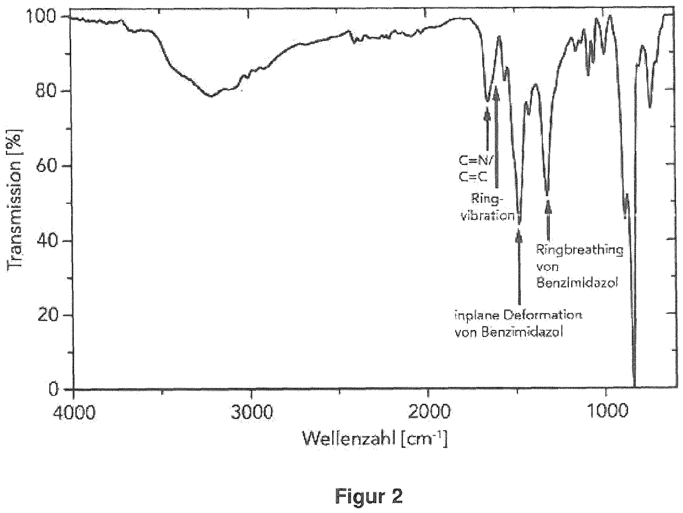

Daraufhin wurde das Reaktionsgemisch unter Rühren innerhalb von 15 min auf 250 °C erhitzt, und diese Temperatur wurde weitere 15 min lang gehalten. Anschließend wurde das Reaktionsgefäß mittels eines Druckluftstroms innerhalb von 30 min abgekühlt. Die nach Öffnen des Autoklavs erhaltene orange Suspension wurde filtriert, wobei neben einem orangefarbenen Feststoff eine klare Flüssigkeit erhalten wurde. Der gebildete Feststoff wurde gründlich mit dest. H₂O und anschließend mit EtOH gewaschen und bei 80 °C im Vakuumtrockenschrank getrocknet. Das FTIR-ATR-Spektrum ist in Fig. 2 dargestellt und bestätigt, dass es sich dabei um das gewünschte Polybenzimidazol handelt. Die für Polybenzimidazole charakteristischen Banden sind: v(C=N/C=C) = 1615 cm⁻¹, v(Ringschwingung) = 1585 cm⁻¹ (charakteristisch für die Konjugation zwischen Benzol- und Imidazol-Ring), v(Benzimidazol; "in plane"-Deformationsschwingung) = 1445 cm⁻¹ und v(Benzimidazol, Ringbreathing) = 1285 cm⁻¹.

Extraktion von Proben des Polybenzimidazols der Formel (1) mit verschiedenen organischen Lösungsmitteln (MeOH, EtOH, iPrOH, Phenol, PE, EE, CDCl₂, CDCl₃, Aceton, Acetonitril) ergab jeweils klare Filtrate, die keinerlei Verunreinigungen enthielten. Eine nähere Untersuchung der wässrigen Phase nach der Hydrothermalpolymerisation ergab, dass diese ebenfalls keinerlei Nebenprodukte der Hydrothermalpolymerisation enthielt.

### Beispiel 2

### Herstellung eines Polybenzimidazols der Formel (1) bei 180 °C

Die Reaktionsführung war im Wesentlichen gleich wie in Beispiel 1, mit der Ausnahme, dass das Reaktionsgemisch im Autoklav innerhalb von 10 min auf nur 180 °C erhitzt aber 2 h lang auf dieser Temperatur gehalten wurde und das Abkühlen mittels Druckluftstrom 20 min in Anspruch nahm. Es wurde wiederum neben einer klaren wässrigen Phase ein orangefarbener Feststoff erhalten, dessen FTIR-ATR-Spektrum praktisch identisch mit jenem aus Fig. 2 war.

Auch in diesem Fall lieferten Extraktionsversuche des Polybenzimidazols der Formel (1) und Untersuchungen der wässrigen Phase nach der Hydrothermalpolymerisation keinerlei Ergebnis.

### Beispiel 3

### Herstellung eines Polybenzimidazols der Formel (1) bei 180 °C ohne Rühren

Die Reaktionsführung war im Wesentlichen gleich wie in Beispiel 2, mit der Ausnahme, dass die durch Vermischen der Reaktanten gebildete rote Suspension in einen ungerührten Batchautoklav übergeführt wurde, der in einen auf 180 °C vorgeheizten Ofen gestellt wurde, wo das Reaktionsgemisch 4 h reagieren gelassen wurde. Anschließend wurde der Autoklav durch Abschrecken mit kaltem Leitungswasser abgekühlt. Erneut wurden eine klare wässrige Phase und ein orangefarbener Feststoff erhalten, dessen FTIR-ATR-Spektrum ebenfalls praktisch identisch mit jenem aus Fig. 2 war.

Erneut lieferten Extraktionsversuche des Polybenzimidazols der Formel (1) und Untersuchungen der wässrigen Phase nach der Hydrothermalpolymerisation keinerlei Ergebnis.

### Beispiel 4

### Herstellung eines Polybenzimidazols der Formel (1) bei 250 °C unter Argon

Die Reaktionsführung war zunächst im Wesentlichen gleich wie in Beispiel 1, wobei allerdings das Reaktionsgemisch vor dem Erhitzen mittels Einleitung von Argon entgast wurde, um Sauerstoff sowohl aus der wässrigen Phase als auch aus dem Gasraum darüber zu entfernen. Anschließend wurde es innerhalb von 60 min auf 250 °C erhitzt und weitere 60 min auf dieser Temperatur gehalten (Gesamtreaktionszeit: 2 h). Das Abkühlen des Reaktors erfolgte danach nicht mittels Druckluftstrom, sondern durch Abschrecken mit kaltem Leitungswasser. Wiederum wurde neben einer klaren wässrigen Phase ein orangefarbener Feststoff erhalten, dessen FTIR-ATR-Spektrum ebenfalls praktisch identisch mit jenem aus Fig. 2 war, was belegt, dass - im Gegensatz zur Lehre des Standes der Technik - die Gegenwart von Sauerstoff für die zyklisierende Kondensation des intermediären Polyimins zum gewünschten Polybenzimidazol unter Hydrothermalbedingungen nicht erforderlich ist, um sie in relativ kurzer Zeit abzuschließen.

Extraktionsversuche des Polybenzimidazols der Formel (1) und Untersuchungen der wässrigen Phase nach der Hydrothermalpolymerisation lieferten auch in diesem Fall keinerlei Ergebnis.

### Beispiel 5

### Herstellung eines Polybenzimidazols der Formel (2) bei 250 °C

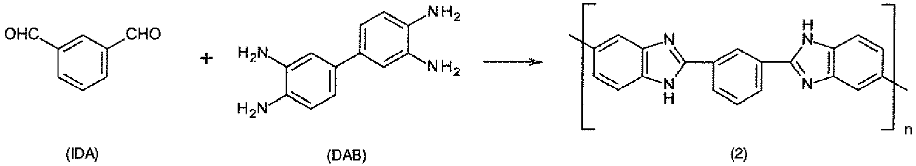

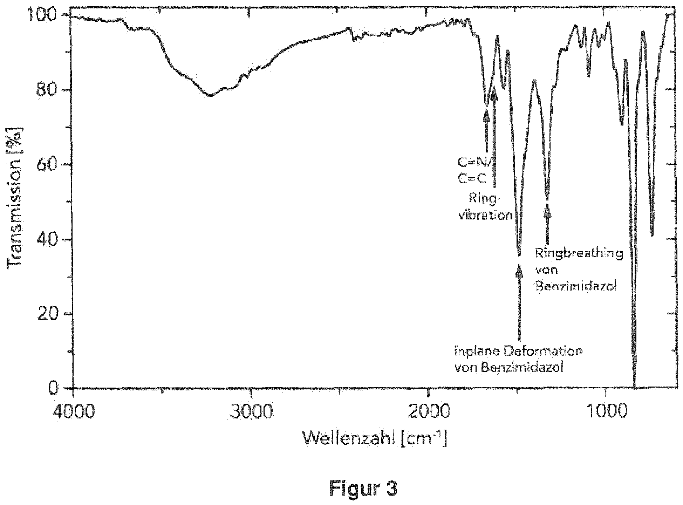

Die Reaktionsführung war im Wesentlichen gleich wie in Beispiel 1, wobei allerdings anstelle von TDA die gleiche Menge an Isophthalsäuredianhydrid (IDA) eingesetzt wurde. Auch im vorliegenden Fall wurde neben einer klaren wässrigen Phase ein orangefarbener Feststoff erhalten (und in analoger Weise gereinigt), dessen FTIR-ATR-Spektrum in Fig. 3 dargestellt ist. Anhand dessen wurde der Feststoff als das gewünschte Polybenzimidazol der Formel (2) identifiziert. Die charakteristischen Banden sind: v(C=N/C=C) = 1625 cm⁻¹, v(Ringschwingung) = 1585 cm⁻¹, v(Benzimidazol; "in plane"-Deformationsschwingung) = 1440 cm⁻¹ und v(Benzimidazol, Ringbreathing) = 1285 cm⁻¹.

Analoge Extraktionsversuche mit dem Polybenzimidazol der Formel (2) wie für jenes der Formel (1) sowie Untersuchungen der wässrigen Phase nach der Hydrothermalpolymerisation lieferten keine Ergebnisse, so dass es auch in diesem Fall zu keinerlei Bildung von Nebenprodukten gekommen war.

## Patentansprüche

1. Verfahren zur Herstellung von Polybenzimidazolen der nachstehenden Formel (1) oder (2), worin n ≥ 2 ist: 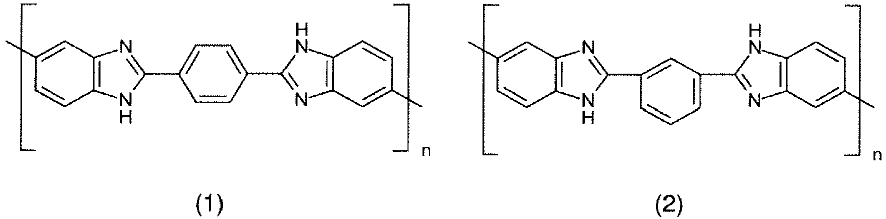
mittels Polykondensation entsprechender Dialdehyde und Tetraamine durch gemeinsames Erhitzen der Reaktanten,
**dadurch gekennzeichnet, dass**
die Herstellung der Polybenzimidazole der Formel (1) oder (2) ausgehend von den Dialdehyden und im Wesentlichen ohne jegliche Bildung von Nebenprodukte erfolgt, indem
a) zunächst das Dialdehyd und das Tetraamin in Wasser bei Raumtemperatur miteinander vermischt werden, wobei ein Polyimin-Zwischenprodukt der Formel (3) oder (4) gebildet wird, worin n und m jeweils ≥ 1 sind: 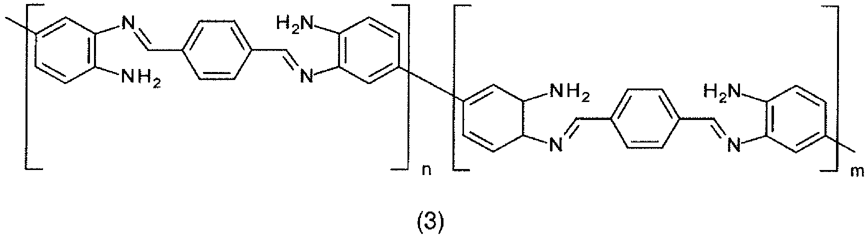 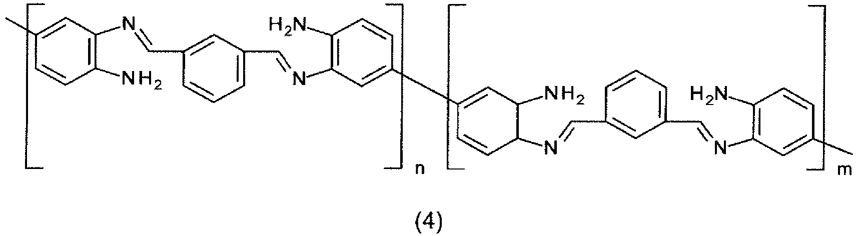 wonach
b) die Polykondensation unter hydrothermalen Bedingungen durch Erhitzen in Wasser als Lösungsmittel unter Druck auf Temperaturen über 100 °C durchgeführt wird.

2. Verfahren nach Anspruch 1, **dadurch gekennzeichnet, dass** ein Polybenzimidazol der Formel (1) gemäß nachstehendem Reaktionsschema hergestellt wird, indem in Schritt a) Terephthalsäuredialdehyd, TDA, und Diaminobenzidin, DAB, in Wasser vermischt und in Schritt b) unter hydrothermalen Bedingungen zum Polybenzimidazol der Formel (1) polykondensiert werden:

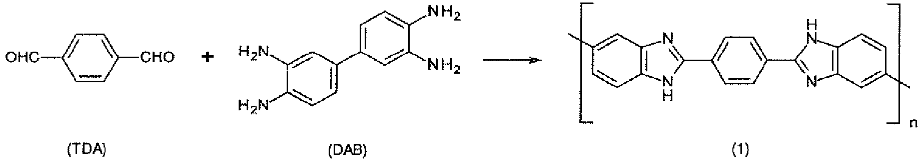

3. Verfahren nach Anspruch 1, **dadurch gekennzeichnet, dass** ein Polybenzimidazol der Formel (2) gemäß nachstehendem Reaktionsschema hergestellt wird, indem in Schritt a) Isophthalsäuredialdehyd, IDA, und Diaminobenzidin, DAB, in Wasser vermischt und in Schritt b) unter hydrothermalen Bedingungen zum Polybenzimidazol der Formel (2) polykondensiert werden:

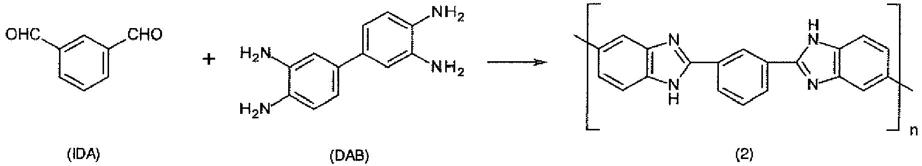

4. Verfahren nach einem der Ansprüche 1 bis 3, **dadurch gekennzeichnet, dass** die Polykondensation in Schritt b) bei einer Temperatur von zumindest 180 °C für eine Dauer von zumindest 30 min durchgeführt wird.

5. Verfahren nach Anspruch 4, **dadurch gekennzeichnet, dass** die Polykondensation in Schritt b) bei einer Temperatur von zumindest 180 °C für eine Dauer von zumindest 2 h durchgeführt wird.

6. Verfahren nach Anspruch 4, **dadurch gekennzeichnet, dass** die Polykondensation in Schritt b) bei einer Temperatur von zumindest 250 °C für eine Dauer von zumindest 30 min durchgeführt wird.

7. Verfahren nach einem der vorangegangenen Ansprüche, **dadurch gekennzeichnet, dass** Schritt a) in Gegenwart von Luftsauerstoff und/oder Schritt b) in Abwesenheit von Luftsauerstoff durchgeführt wird.

## Claims

1. A method for preparing polybenzimidazoles of formula (1) or (2) below, wherein n is ≥ 2: 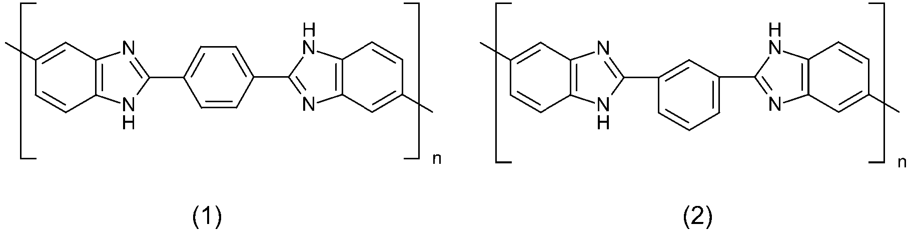
by polycondensation of corresponding dialdehydes and tetraamines by jointly heating the reactants,
**characterized in that**
the preparation of polybenzimidazoles of formula (1) or (2) is carried out by using the dialdehydes as starting material and substantially without formation of any by-products, wherein
a) first, the dialdehyde and the tetraamine are mixed in water at room temperature, which results in the formation of a polyimine intermediate of formula (3) or (4), wherein n and m are each ≥ 1: 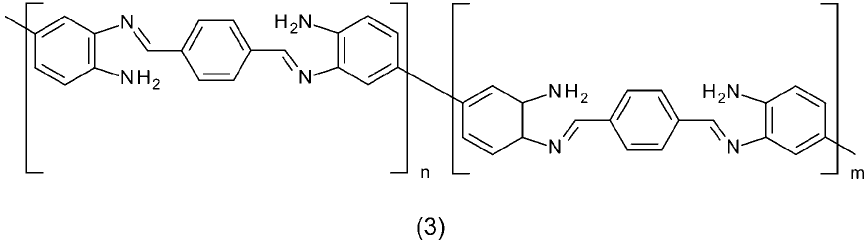 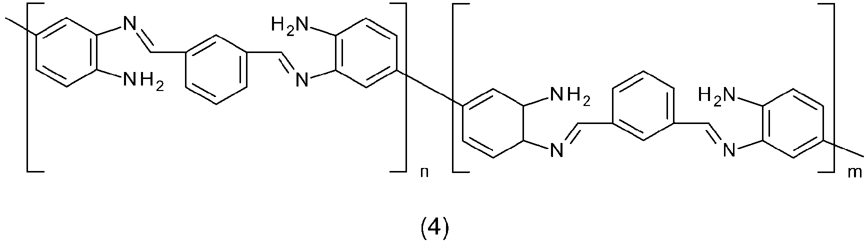 whereafter
b) polycondensation is carried out under hydrothermal conditions by heating, in water as a solvent and under pressure, to temperatures above 100 °C.

2. The method according to claim 1, **characterized in that** a polybenzimidazole of formula (1) is prepared according to the reaction scheme below, wherein, in step a), terephthalic dialdehyde (TDA) and diaminobenzidine (DAB) are mixed in water and, in step b), they are polycondensed under hydrothermal conditions to form the polybenzimidazole of formula (1):

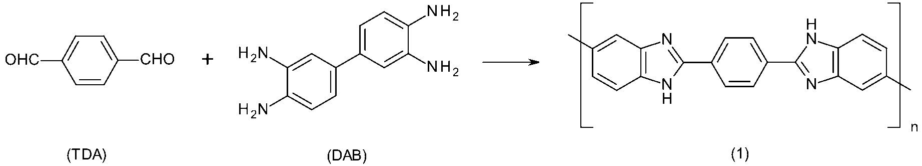

3. The method according to claim 1, **characterized in that** a polybenzimidazole of formula (2) is prepared according to the reaction scheme below, wherein, in step a), isophthalic dialdehyde (IDA) and diaminobenzidine (DAB) are mixed in water and, in step b), they are polycondensed under hydrothermal conditions to form the polybenzimidazole of formula (2):

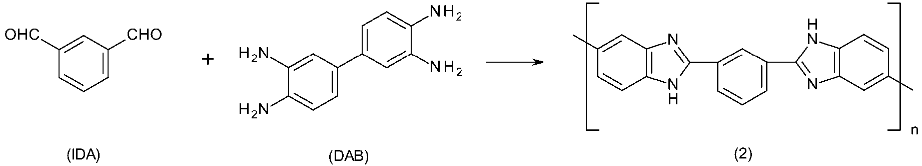

4. The method according to any one of claims 1 to 3, **characterized in that** the polycondensation in step b) is carried out at a temperature of at least 180 °C and for a duration of at least 30 min.

5. The method according to claim 4, **characterized in that** the polycondensation in step b) is carried out at a temperature of at least 180 °C and for a duration of at least 2 h.

6. The method according to claim 4, **characterized in that** the polycondensation in step b) is carried out at a temperature of at least 250 °C and for a duration of at least 30 min.

7. The method according to any one of the preceding claims, **characterized in that** step a) is carried out in the presence of atmospheric oxygen and/or step b) is carried out in the absence of atmospheric oxygen.

## Revendications

1. Procédé de production de polybenzimidazoles de formule (1) ou (2) ci-dessous, dans laquelle n ≥ 2: 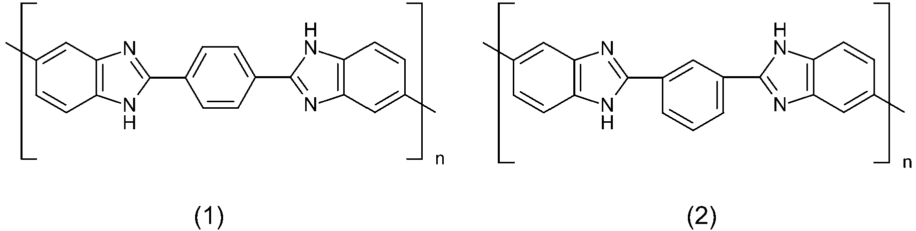
par polycondensation de dialdéhydes et tétraamines correspondants par chauffage collectif des réactifs,
**caractérisé en ce que**
la préparation de polybenzimidazoles selon la formule (1) ou (2) est effectuée à partir des dialdéhydes et essentiellement sans aucune formation de sous-produits,
a) initialement le dialdéhyde et la tétraamine sont mélangés dans de l'eau à température ambiante, ayant pour résultat la formation de polyimine en tant que produit intermédiaire de formule (3) ou (4), dans laquelle n et m sont chacun ≥ 1: 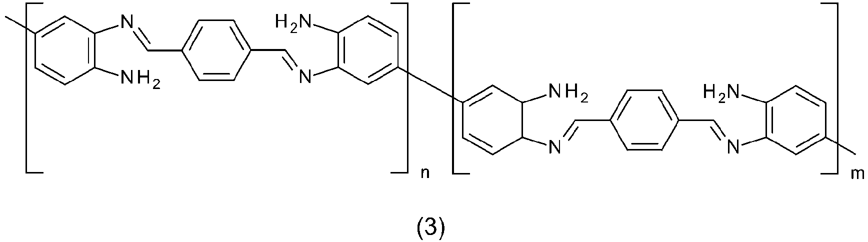 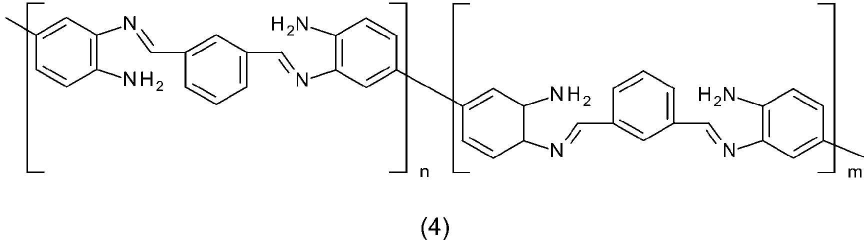 après quoi
b) la polycondensation est réalisée sous des conditions hydrothermiques par chauffage à des températures supérieures à 100 °C dans de l'eau en tant que solvant sous pression.

2. Procédé selon la revendication 1, **caractérisé en ce qu'**un polybenzimidazole de formule (1) est préparé selon le schéma réactionnel ci-dessous, dans lequel, à l'étape a), de téréphthaldicarboxaldehyde (TDA) et de la diaminobenzidine (DAB) sont mélangés dans de l'eau et, à l'étape b), polycondensés sous des conditions hydrothermiques pour former ledit polybenzimidazole de formule (1):

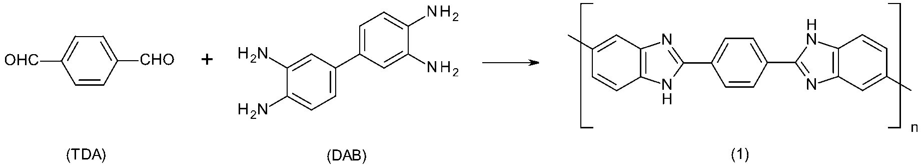

3. Procédé selon la revendication 1, **caractérisé en ce qu'**un polybenzimidazole de formule (2) est préparé selon le schéma réactionnel ci-dessous, dans lequel, à l'étape a), de isophthaldicarboxaldehyde (IDA) et de la diaminobenzidine (DAB) sont mélangés dans de l'eau et, à l'étape b), polycondensés sous des conditions hydrothermiques pour former ledit polybenzimidazole de formule (2):

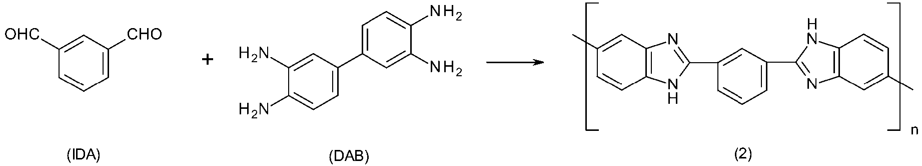

4. Procédé selon l'une quelconque parmi les revendications 1 à 3, **caractérisé en ce que** la polycondensation à l'étape b) est réalisée à une température d'au moins 180 °C et pour une durée d'au moins 30 min.

5. Procédé selon la revendication 4, **caractérisé en ce que** la polycondensation à l'étape b) est réalisée à une température d'au moins 180 °C et pour une durée d'au moins 2 h.

6. Procédé selon la revendication 4, **caractérisé en ce que** la polycondensation à l'étape b) est réalisée à une température d'au moins 250 °C et pour une durée d'au moins 30 min.

7. Procédé selon l'une quelconque parmi les revendications précédentes, **caractérisé en ce que** l'étape a) est réalisée en présence d'oxygène atmosphérique et/ou l'étape b) est réalisée en absence d'oxygène atmosphérique.
